# EUROPEAN PATENT SPECIFICATION

(11) **EP 3 809 921 B1**
(45) Date of publication and mention of the grant of the patent: **31.08.2022**
(21) Application number: 19730806.7
(22) Date of filing: 19.06.2019
(51) Int. Cl.: A47G 19/14, A47J 31/06, A47J 31/20, A47J 41/00, A47G 19/16, B65D 47/00

(54) **TEA PREPARATION DEVICE FOR THERMOS JUGS AND VACUUM MUGS**
TEEZUBEREITUNGSVORRICHTUNG FÜR THERMOSKANNEN UND VAKUUMBECHER
DISPOSITIF DE PRÉPARATION DE THÉ POUR CARAFES THERMOS ET TASSES SOUS VIDE

(30) Priority: 21.06.2018 DE 202018103516 U; 21.06.2018 FR 1855512
(43) Date of publication of application: 28.04.2021
(73) Proprietor: Emsa GmbH, 48282 Emsdetten (DE)
(72) Inventor: HEITJANS, Peter, 48282 Emsdetten (DE)
(74) Representative: SEB Développement
(86) International application number: PCT/EP2019/066146
(87) International publication number: WO 2019/243397

(56) References cited:
- WO-A1-2012/006787
- WO-A1-2017/177368
- DE-U1-202016 103 314
- KR-B1- 101 310 266

## Description

The invention refers to a tea preparation device for thermos jugs and vacuum mugs with the features of the preamble of claim 1.

A tea preparation device which also serves as a cap or a lid element for a thermos jug or vacuum mug is known from DE 20 2016 103 314 U1. Dry tea leaves can be stored inside a tea strainer first wherein the strainer is separated from the interior of the jug or mug which can be filled with hot water. The strainer is lowered in the water right before serving. After brewing, the tea strainer is lifted up from the body containing the tea and is completely separated with its content from the prepared tea beverage. Thus, bitter substances cannot drip into the prepared tea in the interior of the jug or mug beneath. A guiding mechanism for the tea strainer with a helical guide line allows to lower it with little expenditure of force by means of an externally accessible operating element but only when a small pitch of the screw is selected. Therefore, the user must perform several revolutions of the control element to completely lower the tea strainer or to retract it again. For revolving the user needs both hands. In addition, he cannot clearly determine whether the tea strainer has been lowered or retracted or is in an intermediate position without removing the tea preparation device from any jug or vacuum mug which does not have transparent walls.

The object of the present invention is thus to provide an improved tea preparation device for an insulating jug or insulating mug enabling easy tea preparation in mobile use, wherein in particular, a rapid displacement of the tea strainer between a closed position and a brewing position should be possible and a clear identification of its current position should be possible as well.

This object is achieved by a tea preparation device with the features of claim 1.

The at least two-part crank mechanism connects a control element and a tea strainer receiving element. With a small movement of the control element on the outside of the base element a larger stroke on the tea strainer is induced in order to push the tea strainer partially out from the central tube for the brewing process. The same control element and crank mechanism retracts it fully back into the central tube so that the tea strainer is liquid-tight received within the central tube. No residual liquid from the infused tea leaves can drip into the interior of the thermos jug or vacuum mug.

In addition, the crank mechanism with its concatenated lever elements allows a slim design of the lowering unit which is easy to place in the inside of the base element even with a small diameter of the tea preparation device.

Another benefit is that the flow path for pouring liquid is completely led past the central tube with the lowering unit and the tea strainer situated therein. It is advantageous that the tea strainer can be moved independently of the opening or closing of the outlet opening by the closure unit. The brewing process can thus be made both with an open as well as with a closed outlet opening. Thereby, the closure unit can be designed in a simple manner.

In a preferred embodiment of the invention the closure unit is designed as such that it is easy to rotate over a certain angle relative to the base element, whereby at least one pouring opening located radially outside of the central tube is released or closed with the rotation.

In another embodiment it is preferred that the closure unit is mushroom-shaped with at least one slim cylindrical tubular central section and a radially overlying brim. The cylindrical central section is inserted into the central tube of the base element which is cylindrical, too. It is open at the top, so that parts of the crank mechanism reach through the central tube of the base element and the central section to the outside. At the same time the brim covers the at least one outlet opening in a closed position and closes it via a sealing ring or a sealing surface.

The connection between the base element and the closure unit can be easily achieved via a screw thread, wherein an intermediate sealing element is compressed when screwing.

However, preferably a bayonet coupling is formed between the cylindrical central section of the closure unit and the central tube of the base element. As a result, defined angular positions are always given both in an opening position and in a locking position.

A particularly preferred embodiment provides that the bayonet closure is formed by at least two pins arranged on the circumference of the central section and by at least two guide grooves formed on the inner side of the central tube. The guide grooves each have an insertion section aligned in parallel or at an acute angle to the central axis and an insertion section aligned relative to the central axis aligned locking portion in an obtuse angle. The insertion portion allows easy disassembly, while the locking portion allows two additional positions due to its inclination:
- a closed position in which the pins are positioned at the end of the locking portion of the guide groove and in which the outlet opening is closed, and
- a drinking position in which the closure unit is secured with the base element, so it cannot fall out wherein there is such an axial distance between the closure unit and the base element that the outlet opening is open and exposed.

The attachment of the tea strainer with the closure unit can be done via snap-in connections. A screw is also possible, which has the advantage that the diameter can be chosen so that the closure unit can be pulled out with the tea strainer upwards from the central tube, because no lateral projections must be provided.

The tea preparation device of the invention is described with reference made to the embodiments which are illustrated in the following drawings. The figures show:
- FIG. 1: a tea preparation device in a closed position, seen from the out-side in a perspective view;
- FIG. 2: the tea preparation device with lowered tea strainer in a brewing position in perspective view;
- FIG. 3: the tea preparation device in a drinking position in perspective view;
- FIG. 4: the tea preparation device in unlocked position before disassembly in perspective view;
- FIG. 5: the dismantled tea preparation device in perspective view;
- FIG. 6: the tea preparation device in closed position in sectional view;
- FIG. 7: the tea preparation device with lowered tea strainer in sectional view;
- FIG. 8: the tea preparation device with detached tea strainer in sectional view;
- FIG. 9: another embodiment of a tea preparation device in a locked position, in perspective sectional view;
- FIG. 10: an enlarged view of the area indicated in FIG. 9;
- FIG. 11: the tea preparation device pursuant to FIG. 9 in unlocked position, in perspective sectional view;
- FIG. 12: the tea preparation device pursuant to FIG. 9 in brewing position with lowered tea strainer, in perspective sectional view; and
- FIG. 13: the tea preparation device pursuant to FIG. 9 mounted on a vacuum mug.

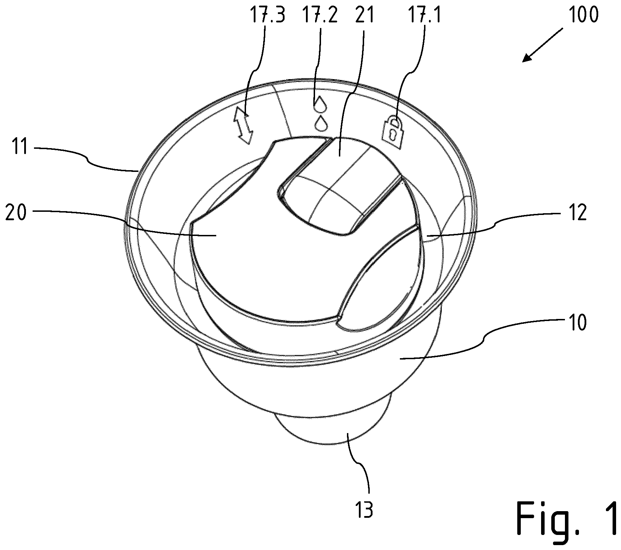

FIG. 1 shows a tea preparation device 100 in a perspective view from above. The device 100 essentially consists of a base element 10 which can be placed on the upper part of a vacuum mug and of a closure unit 20 which is inserted into the base element 10 and which is rotatable relatively to the latter. Marks 17.1, 17.2, 17.3 are provided on the inside of a pouring edge 11 to indicate the three possible positions of the closure unit 20. An operating element 21 which is pivotally mounted in the closure unit 20 marks the current position. In Figure 1, this corresponds to a closed position 17.1. An outlet space 12 is formed between the closure unit 20 and the pouring edge 11. Towards the bottom, the base element 10 continues in a cylindrical central tube 13.

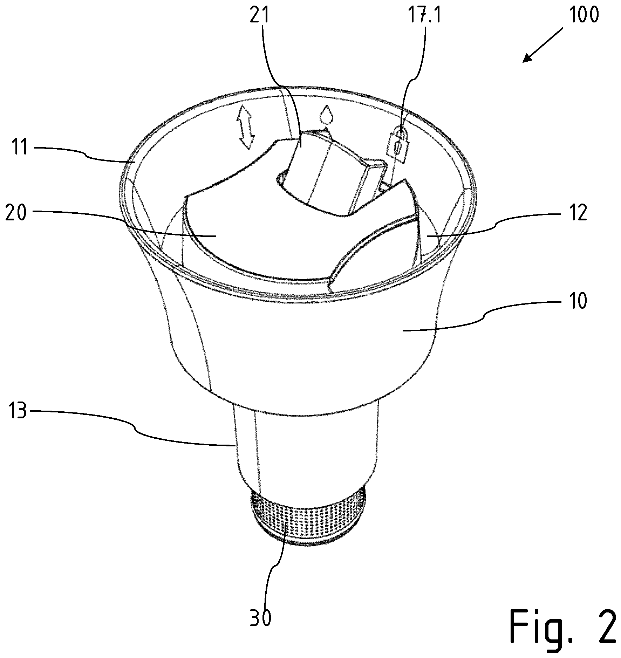

In Figure 2 the tea preparation device 100 is also displayed in the closed position of the closure unit 20 wherein the angular position relative to the base element 10 has not changed in comparison with FIG. 1. Thus, the base element 10 and the closure unit 20 are sealed liquid-tight against each other. Compared with Figure 1, the operating element 21 has been pulled upwards, whereby a tea strainer 30 has been pushed out of the central tube 13 by means of an inner lowering unit.

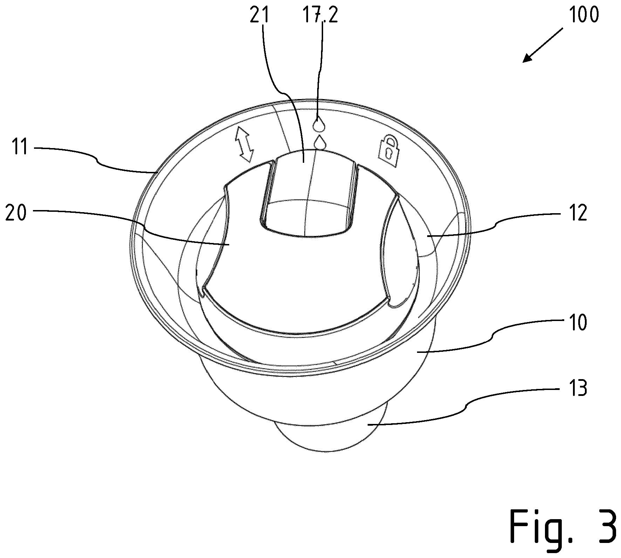

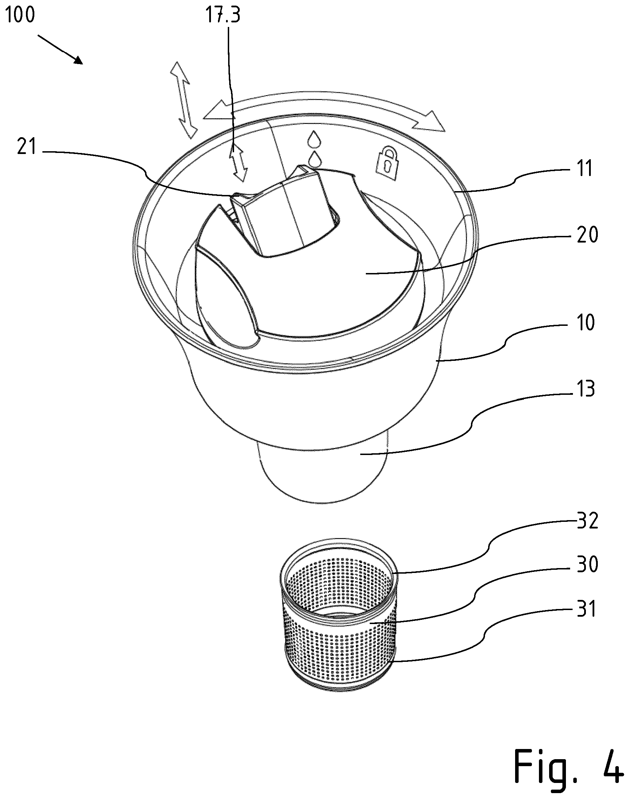

In FIG. 3, the tea preparation device 100 is depicted in the drinking position of the closure unit 20 indicated by mark 17.2, that is to say it has been rotated counter clockwise by an angle of approximately 25 ° in comparison with its position shown in FIGS 1 and 2. The operating element 21 is in the lowered starting position. Consequently, the tea strainer is still received in the upper part of the central tube 13. What cannot be seen here is that with the rotation the base element 10 and the closure unit 20 have been axially moved apart from each other. Consequently, at least one pouring opening is opened and the beverage in the interior of a jug or mug on which the tea preparation device 100 is put can get into the outlet space 12. The beverage can either be drunk directly from the spout edge 11 or poured over it into a cup. Compared to the previous position shown in FIG. 3 the closure unit 20 in the illustration in Figure 4 has been rotated into the unlocked position by still another angle step of about 25 ° relative to the base element 10. This position is indicated by mark 17.3. In addition, the tea screen 30 was pushed out of the central tube 13 via the operating element 21 and has been pulled off downwards.

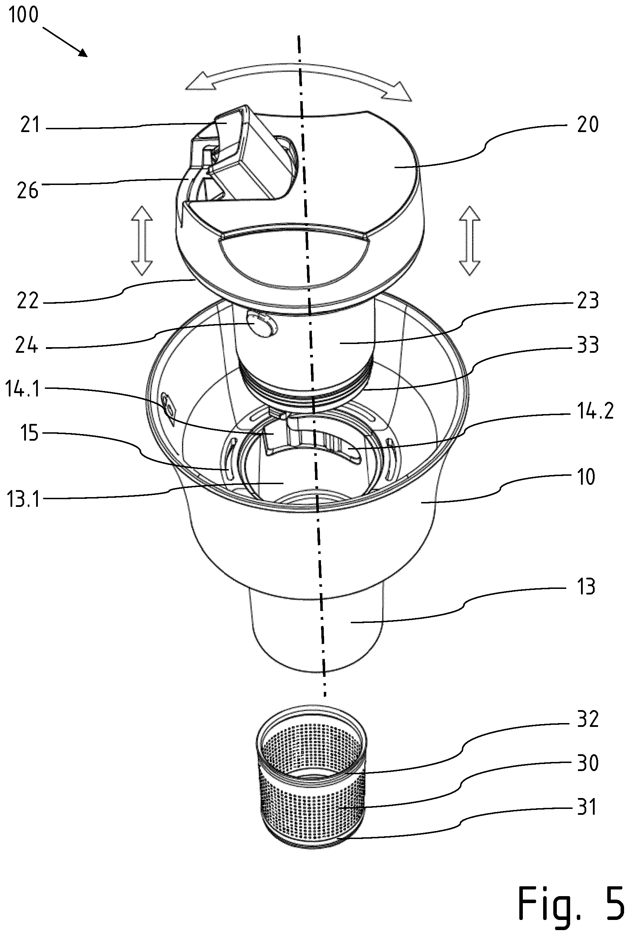

From the unlocking position according to FIG. 4, the tea preparation device 100 can be broken down into its main components, as shown in FIG 5.

In order to connect the cup-shaped tea strainer 30 positively with a tea strainer receiving element 33 arranged inside the central tube 13 two grooves 32 are embossed in the region of the upper edge of the tea strainer 30. In the region of the bottom plate of the tea strainer 30, a sealing ring 31 is attached, so that it is sealed liquid-tight with respect to the central tube 13 while it is moved.

The closure unit 20 has a tubular central section 23 and a radially overlying brim 22. Radially protruding pins 24 are formed on the outside of the central section 23. In the upper part of the locking unit 20, a recess 26 is provided to accommodate the operating element 21. The tea strainer receiving element 33 protrudes at the bottom of the central section 23.

A plurality of arcuate pouring openings 15 are arranged around the orifice of the central tube 13. On the inner wall 13.1 of the central tube 13 guide grooves are formed for the pins 24, of which one is visible in Figure 5. From the upper edge of the central tube 13 an insertion portion 14.1 of the guide groove extends downwards and in parallel to the central axis and then passes at an angle of more than 90 ° into a locking portion 14.2. Two locking positions are provided within the locking portion 14.2, namely one in the middle for the drinking position and one at the end for the closure position.

The block arrows in FIG. 5 mark, on the one hand, the possible angular range over which the closure unit 20 can be rotated relative to the base element 10, and, on the other hand, the vertical axial movement for disassembling and assembling the device.

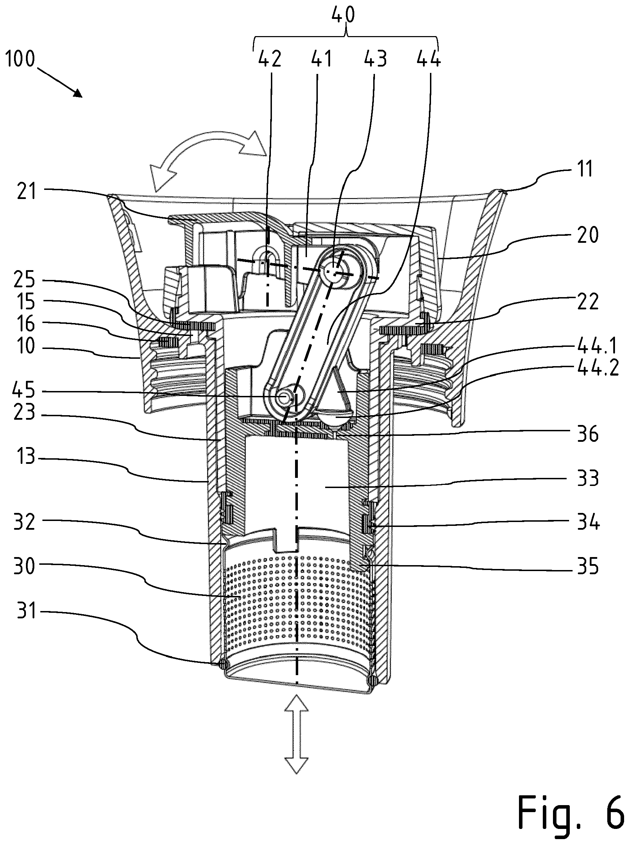

FIG. 6 shows the internal structure of a tea preparation device 100 according to the invention in the form of a perspective sectional view. The parts are arranged in the closed position according to FIG. 1.

The central section 23 of the closure unit 20 is inserted into the upper part of the central tube 13. The brim 22 of the closure unit 20 bears on a sealing ring 25 on the radially outside of the pouring openings 15. A sealing ring 16 and a threaded ring for a connection to the neck of a vacuum mug or thermos jug are provided on the base element 10.

A tea strainer receiving element 33 is guided in the central section 23 with a majority of its height. A bottom part projects into the central tube 13 and has a sealing ring 34 on the outer circumference, which seals axially against the lower edge of the central section 23 and effects a tight radial seal even if the tea strainer receiving element 33 is lowered axially. Latching tongues 35 engage under the groove 32 on the tea strainer 30 thereby securing the tea strainer 30 to the tea strainer receiving element 33.

In the interior of the tea preparation device 100, a lowering unit 40 in the form of a two-part crank mechanism is formed. The operating element 21 is extended to a first lever member 41 which is mounted on a pivot bearing 42 in the closure unit 20. The pivot bearing 42 is the only point of the transmission chain fixed to the body of the closure unit. A hinge 43 is formed between a rear end of the first lever element 41 and the top of a second lever element 44. In turn, the second lever element 44 is connected via another hinge 45 to the tea strainer receiving element 33. In the closed position, the second lever element 44 is aligned at an acute angle to the central axis of the tea preparation device 100. In the closed position illustrated in FIG. 6 the first and the second lever elements 41, 44 enclose an angle of about 70°. It can be seen in FIG. 6 that the crank mechanism requires only minimal space. The elevation of the closure unit 20 with respect to the plane of the pouring openings 15 is small, since only the first lever element 41 with the button formed on one side as the operating element 21 must be received therein. The closure unit 20 with the operating element 21 does not even extend to the level of the pouring edge 11.

The second lever element 44 has a lateral extension 44.1 with a hemispherical sealing element 44.2 which is pressed on a vent opening 36 in the top of the tea strainer receiving element 33 in the closed position.

The sealing ring 31 at the bottom of the tea strainer 30 seals off the tea strainer 30 from the central tube 13. Since the bottom of the tea strainer 30 is impermeable, the tea preparation device 100 is thus already completely sealed off from the receiving space of the jug or vacuum mug. Due to the upper sealing ring 34 and the sealed vent opening 36 the volume between the bottom of the tea strainer 30 and the closed top of tea strainer receiving element 33 is completely sealed upwards as well. No liquid from the tea strainer 30 can leak to the outside, even if the thermos jug or vacuum mug with the tea preparation device 100 should overturn.

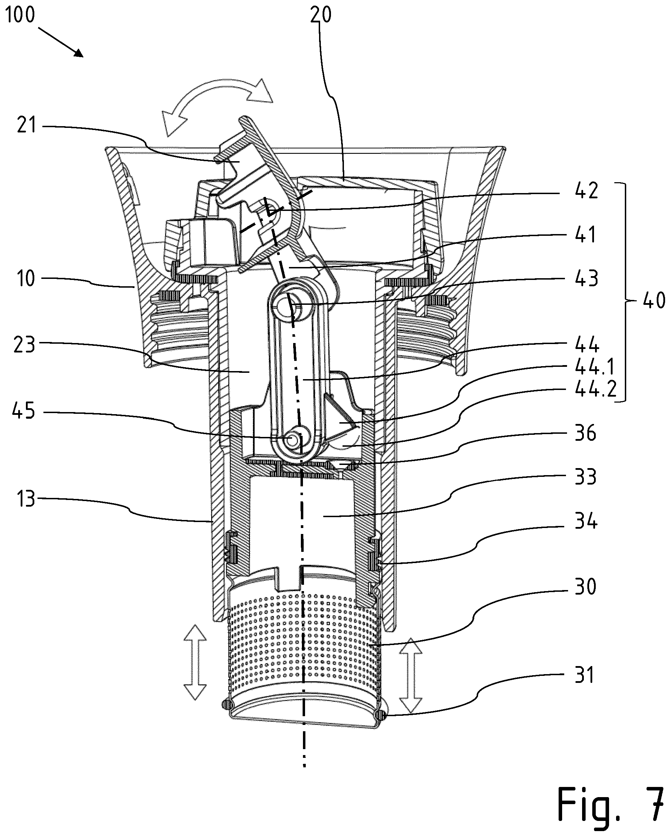

Figure 7 shows the brewing position of the tea preparation device 100 with the tea strainer 30 pushed out. When the operating element 21 is pulled up, the first lever element 41 pivots about the axis 42 thereby moving the hinge 43 downwards. The second lever member 44 connected to the hinge 43 moves to a position parallel to the central axis and pushes the tea strainer receiving element 33 with the attached tea strainer 30 axially downwards. When the lever element 44 is brought into the axially parallel position shown in FIG. 7, the sealing element 44.2 is lifted from the vent opening 36. Since the perforated walls of the tea strainer 30 are at least partially pushed out of the central tube 13, air and / or steam can escape from the interior of the jug or the vacuum mug from the closure unit 20 through the ventilation opening 36.

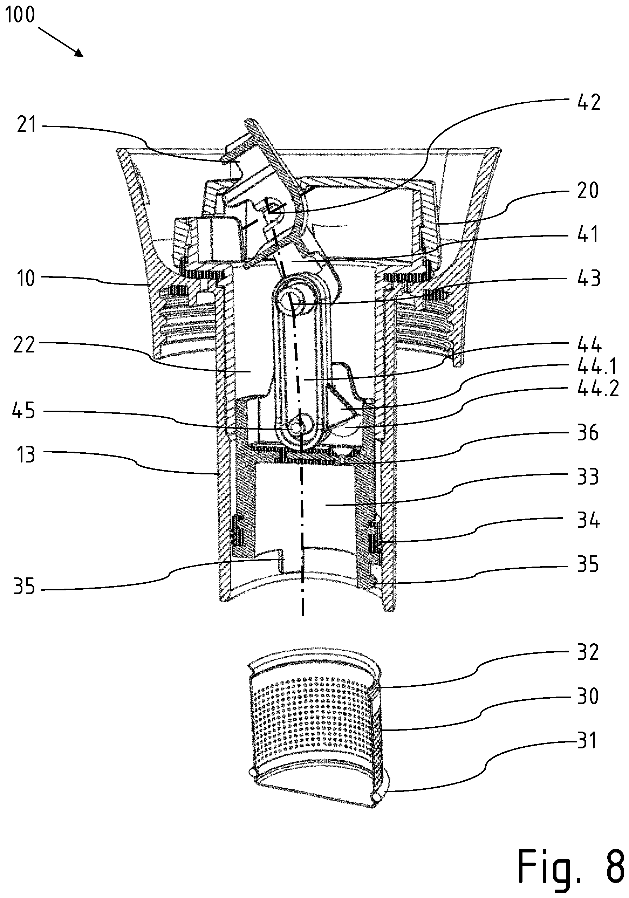

The tea strainer 30 which is snapped to the tea strainer receiving element 33 can easily be detached, see Figure 8. Thus, the tea preparation device 100 needs not be dismantled completely for normal use which includes the filling of tea leaves and the subsequent emptying of the tea strainer.

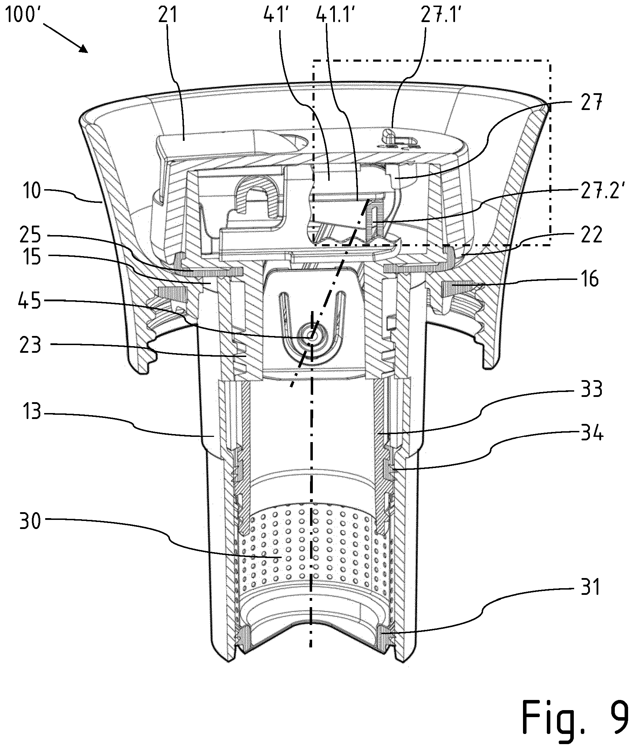

FIG. 9 shows the internal structure of another embodiment of a tea preparation device 100' which is shown in the locked position. The design fully corresponds to the tea preparation device 100 as described before apart from an additional locking mechanism which secures the tea strainer 30 from being lowered inadvertently so that no liquid can pour out. This embodiment of the tea preparation device 100' is slightly modified by two parts. One is an additional safety lock element 27' which is arranged in the body of a closure unit 20' such that it can be shifted between a locked and an unlocked position. Besides the first lever 41' has an additional web 41.1'formed at a lateral face. The safety lock element 27' has a protrusion 27.1' by which it can be grabbed by the user and moved from locked into unlocked position. FIG. 9 shows the locked position. By blocking the first lever element 41' the whole lowering unit 40 is blocked and the tea strainer 30 will be safely accommodated within the central tube 13 which sealed by the bottom plate of the strainer 30 and the sealing ring 31.

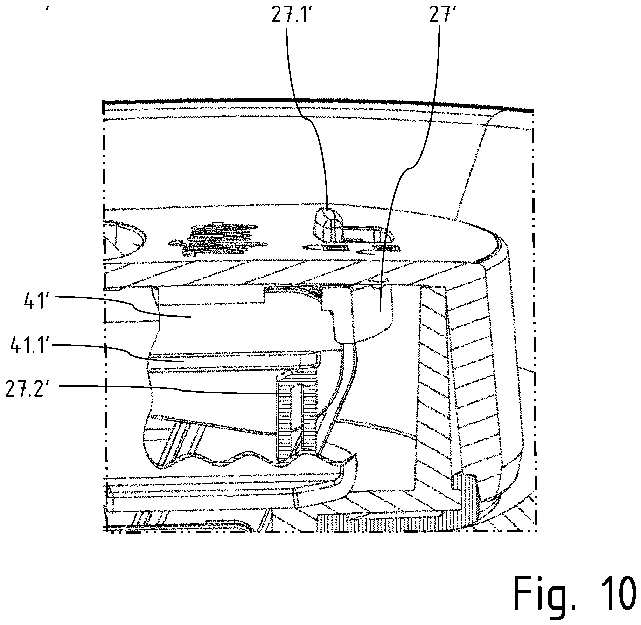

The enlarged view in FIG. 10 shows how the locking mechanism works: the web 41.1' on the first lever element 41' touches the top of an abutment 27.2' which is part of the safety lock element 27'. Thereby the lever element 41' is blocked from being moved down and simultaneously the operating element 21 being part of the lever element 41' is blocked from being pulled up,

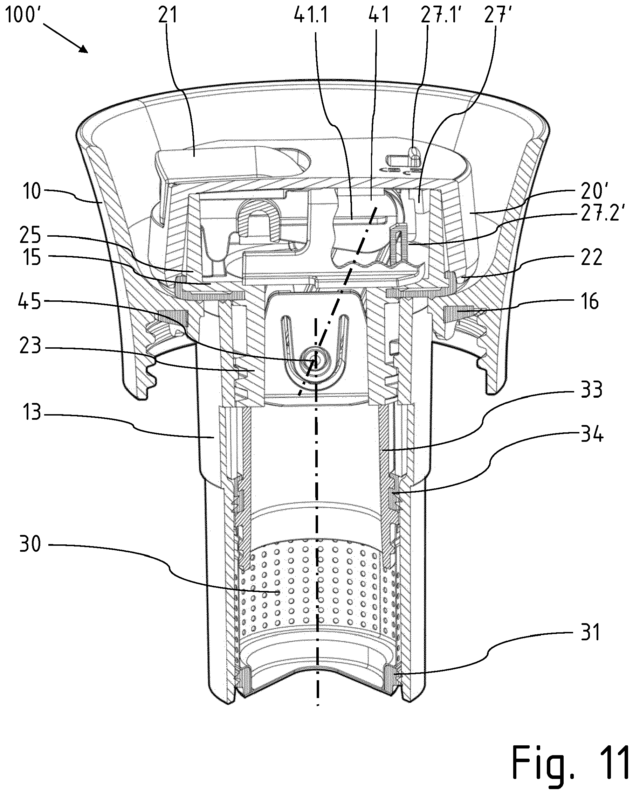

To unlock the lowering unit, the safety lock element 27' is pushed back i.e. towards the outer circumference. The tea preparation device 100' in its unlocked position is shown in FIG. 11. In comparison with its position in FIG. 9 and 10 the safety lock element 27' is shifted outwards for some millimetres.

Thereby the web 41.1' does not touch the top of the abutment 27.2' anymore and is free to be moved downwards.

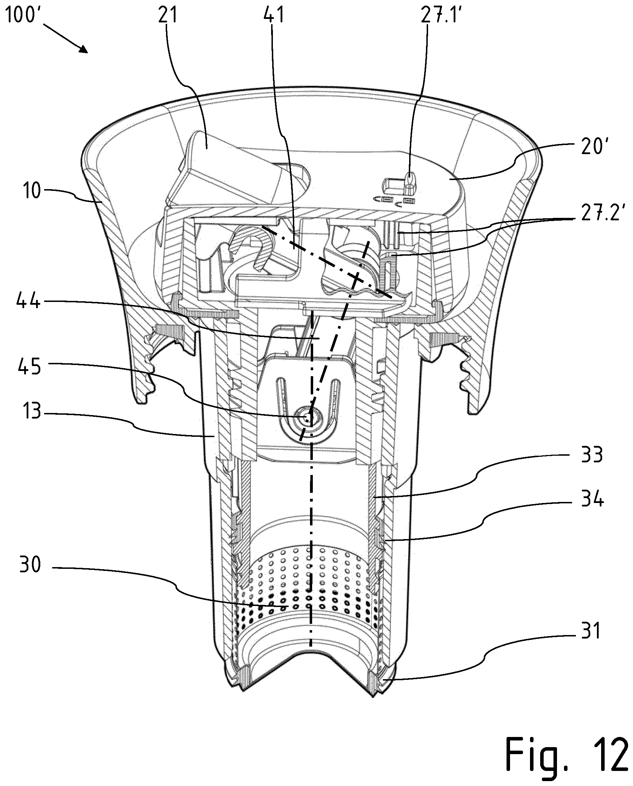

Once the safety lock element 27' has been pushed to the unlock position the function of the tea preparation device 100' is identical to the other embodiment which has been described before. Figure 12 shows the tea preparation device 100' in which the operating element 21 has been pulled up, thereby pivoting the first lever 41'. The second lever 42' connected therewith and the tea strainer receiving element 33 are moved down. The tea strainer 30 is pushed out of the central tube. In figure 12 the bottom part of the tea strainer 30 and its bottom sealing ring 31 has already been moved out of the central tube 13 thereby allowing liquid to flow into the interior of the tea strainer 30.

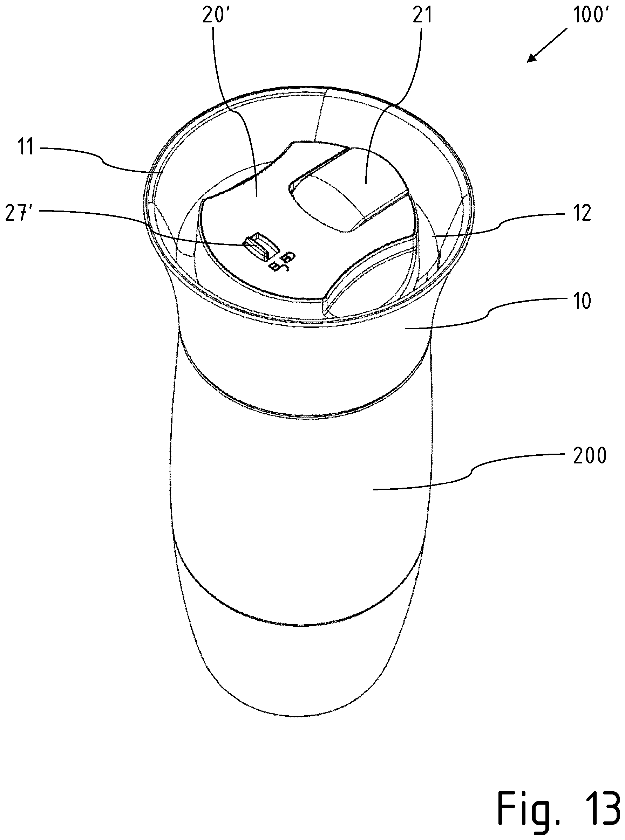

FIG. 13 shows a mug 200 on which the tea preparation device 100' is mounted. This unit provides a receptable for liquids which is easy to carry and easy to handle. Furthermore, it is liquid tight sealed in the closing position which can be secured by the safety lock element 27'.

### List of numerals:

- 100, 100': tea preparation device

- 10: base member
- 11: pouring edge
- 12: outlet space
- 13: central tube
- 13.1: inner wall
- 14.1: insertion portion
- 14.2: locking portion
- 15: pouring openings
- 16: sealing ring
- 17.1, 17.2, 17.3: marks

- 20, 20': closure unit
- 21: operating element
- 22: brim
- 23: central section
- 24: pin
- 25: sealing ring
- 26: recess
- 27': locking element
- 27.1': protrusion

- 30: tea strainer
- 31: sealing ring
- 32: groove
- 33: tea strainer receiving element
- 34: sealing ring
- 35: latching tongues
- 36: vent opening

- 40: lowering unit
- 41: first lever element
- 41.1: web
- 42: axis
- 43: hinge
- 44: second lever element
- 44.1: lateral extension
- 44.2.: hemispherical sealing element
- 45: hinge

- 200: mug

## Claims

1. Tea preparation device (100; 100') for a thermos jug or vacuum mug, at least comprising:
- a base element (10), which is insertable into a neck of the jug or mug and which is provided with at least one outlet opening (15) being closable via a closure unit (20; 20') and which continues below the outlet opening (15) in a central tube (13);
- a tea strainer receiving element (33) which is arranged in the central tube (13) being axially displaceable therein by means of a lowering unit (40) and which is sealed relative to the central tube (13);
- a tea strainer (30) connectable with the tea strainer receiving element (33), which is slidable between a brewing position, in which it protrudes at least with a part of its height from the central pipe (13), and a closed position, in which the central tube (13) is closed by an impermeable bottom of the strainer (30),
**characterized in that** the lowering unit (40) comprises an operating element (21) pivotally mounted in the closure unit (20; 20') and an at least two-part crank gear (41, 42, 43, 44; 41') which connects the operating element (21) and the tea strainer receiving element (33) with each other.

2. Tea preparation device (100; 100') according to claim 1, **characterized in that**:
- the base element (10) is provided with a base sealing ring (16) for sealing against the neck of the insulating jug or mug and that
- the outlet opening (15) is arranged radially between the base sealing ring (16) and the central tube (13).

3. Tea preparation device (100; 100') according to claim 2, **characterized in that** the closure unit (20; 20') has at least one tubular central section (23) and a radially overlying brim (22), wherein the central section (23) can be inserted into the central tube (13) of the base element (10) and wherein the brim (22) covers the outlet opening (15) in a closed position.

4. Tea preparation device (100; 100') according to claim 3, **characterized in that**:
- a ring area located between the base sealing ring (16) and the central tube (13) comprises several arcuate outlet openings (15) and that
- a sealing ring (25) or a respective sealing surface per outlet opening (15) is (are) arranged on the underside of the brim (22).

5. Tea preparation device (100; 100') according to any of claims 1 to 4, **characterized in that** the closure unit (20; 20') can be coupled with the base element (10) via a bayonet coupling (24, 14.1, 14.2) which is formed between the central portion (22) of the closure unit (20; 20') and the central tube (13) of the base element (10).

6. Tea preparation device (100; 100') according to claim 5, **characterized in that** the bayonet lock comprises at least two pin (24) arranged on the circumference of the central portion (23) and at least two guide grooves formed on the inside (13.1) of the central tube (13), wherein the guide grooves each have an insertion portion (14.1) oriented in parallel or at an acute angle to the central axis and aligned at an obtuse angle to the central axis locking portion (14.2).

7. Tea preparation device (100; 100') according to any of claims 1 to 6, **characterized in that**
- a first lever element (41; 41') is pivotally mounted on a fixed bearing (42) in the closure unit (20; 20'), wherein one end of the lever member (41; 41') is designed as an operating element (21) and wherein the other end is connected to a second lever element (44) via a first joint (43) and
- **in that** the second lever element (44) is connected to the tea strainer receiving element (33) via the second joint (45).

8. Tea preparation device (100; 100') according to claim 7, **characterized in that** the one end of the lever element (41; 41') is formed as a button-shaped operating element (21) which is accessible at a recess (26) on the outside of the closure unit (20; 20').

9. Tea preparation device (100; 100') according to claim 7 or 8, **characterized in that** the tea strainer receiving element (33) has an upper closure plate below the second joint (45) having at least one ventilation opening (36) which is closable by a sealing element (44.2) laterally arranged at the second lever member (44).

10. Tea preparation device (100') according to any of the preceding claims **characterized in that** a safety lock element (27') is arranged in the closure unit (20') which is movable between a locked position in which the first lever element (41') is blocked from being moved and an unlocked position in which the first lever element (41') is free to be moved.

11. Tea preparation device (100') according to any of the preceding claims **characterized in that** the safety locking element (27') provides at least one abutment (27.2') and that the first lever element (41') has a web (41.1') on a lateral face which contacts the abutment (27.2) in the locked position of the safety lock element (27').

12. Vacuum mug, at least comprising a double-walled insulating container (200) and a tea preparation device (100; 100') according to any of the preceding claims.

## Patentansprüche

1. Teezubereitungsvorrichtung (100; 100') für eine Thermoskanne oder einen Vakuumbecher, mindestens umfassend:
- ein Bodenelement (10), welches in einen Hals der Kanne oder des Bechers einsteckbar ist und welches mit mindestens einer Auslassöffnung (15) bereitgestellt ist, die über eine Verschlusseinheit (20; 20') verschließbar ist und welche sich unterhalb der Auslassöffnung (15) in einem zentralen Rohr (13) fortsetzt;
- ein Teesiebaufnahmeelement (33), welches in dem im Zentralrohr (13) angeordnet und darin mittels einer Absenkeinheit (40) axial verschiebbar ist und welches gegenüber dem Zentralrohr (13) abgedichtet ist;
- ein Teesieb (30), das mit dem Teesiebaufnahmeelement (33) verbindbar ist, welches zwischen einer Brühstellung, in welcher es zumindest mit einem Teil seiner Höhe aus dem Zentralrohr (13) herausragt, und einer Schließstellung, in welcher das Zentralrohr (13) durch einen undurchlässigen Boden des Siebes (30) verschlossen ist, verschiebbar ist,
**dadurch gekennzeichnet, dass** die Absenkeinheit (40) ein Betätigungselement (21), das in der Verschlusseinheit (20; 20') schwenkbar gelagert ist, und ein mindestens zweiteiliges Kurbelgetriebe (41, 42, 43, 44; 41') umfasst, welches das Betätigungselement (21) und das Teesiebaufnahmeelement (33) miteinander verbindet.

2. Teezubereitungsvorrichtung (100; 100') nach Anspruch 1, **dadurch gekennzeichnet, dass**:
- das Bodenelement (10) mit einem Bodendichtring (16) zur Abdichtung gegen den Hals der Isolierkanne oder des Bechers bereitgestellt ist und dass
- die Auslassöffnung (15) radial zwischen dem Bodendichtring (16) und dem Zentralrohr (13) angeordnet ist.

3. Teezubereitungsvorrichtung (100; 100') nach Anspruch 2, **dadurch gekennzeichnet, dass** die Verschlusseinheit (20; 20') mindestens einen rohrförmigen Mittelabschnitt (23) und einen radial darüber liegenden Rand (22) aufweist, wobei der Mittelabschnitt (23) in das Mittelrohr (13) des Bodenelementes (10) einsteckbar ist und wobei der Rand (22) in geschlossener Stellung die Auslassöffnung (15) abdeckt.

4. Teezubereitungsvorrichtung (100; 100') nach Anspruch 3, **dadurch gekennzeichnet, dass**:
- ein zwischen dem Bodendichtring (16) und dem Zentralrohr (13) befindlicher Ringbereich mehrere bogenförmige Auslassöffnungen (15) aufweist und dass
- an der Unterseite des Randes (22) ein Dichtungsring (25) oder eine jeweilige Dichtungsfläche pro Auslassöffnung (15) angeordnet ist.

5. Teezubereitungsvorrichtung (100; 100') nach einem der Ansprüche 1 bis 4, **dadurch gekennzeichnet, dass** die Verschlusseinheit (20; 20') über eine Bajonettkupplung (24, 14.1, 14.2), welche zwischen dem Mittelabschnitt (22) der Verschlusseinheit (20; 20') und dem Mittelrohr (13) des Bodenelements (10) ausgebildet ist, mit dem Bodenelement (10) koppelbar ist.

6. Teezubereitungsvorrichtung (100; 100') nach Anspruch 5, **dadurch gekennzeichnet, dass** der Bajonettverschluss mindestens zwei am Umfang des Mittelabschnitts (23) angeordnete Stifte (24) und mindestens zwei an der Innenseite (13.1) des Mittelrohrs (13) ausgebildete Führungsnuten umfasst, wobei die Führungsnuten jeweils einen parallel oder in einem spitzen Winkel zur Mittelachse ausgerichteten und in einem stumpfen Winkel zum Mittelachsenverriegelungsabschnitt (14.2) ausgerichteten Einsteckabschnitt (14.1) aufweisen.

7. Teezubereitungsvorrichtung (100; 100') nach einem der Ansprüche 1 bis 6, **dadurch gekennzeichnet, dass**
- in der Verschlusseinheit (20; 20') ein erstes Hebelelement (41; 41') an einem Festlager (42) schwenkbar gelagert ist, wobei ein Ende des Hebelglieds (41; 41') als Bedienelement (21) ausgebildet ist und wobei das andere Ende über ein erstes Gelenk (43) mit einem zweiten Hebelelement (44) verbunden ist und
- das zweite Hebelelement (44) über das zweite Gelenk (45) mit dem Teesiebaufnahmeelement (33) verbunden ist.

8. Teezubereitungsvorrichtung (100; 100') nach Anspruch 7, **dadurch gekennzeichnet, dass** das eine Ende des Hebelelements (41; 41') als knopfförmiges Bedienelement (21) ausgebildet ist, welche an einer Aussparung (26) an der Außenseite der Verschlusseinheit (20; 20') zugänglich ist.

9. Teezubereitungsvorrichtung (100; 100') nach Anspruch 7 oder 8, **dadurch gekennzeichnet, dass** das Teesiebaufnahmeelement (33) unterhalb des zweiten Gelenks (45) eine obere Verschlussplatte aufweist, welche mindestens eine Belüftungsöffnung (36) aufweist, welche durch ein seitlich am zweiten Hebelglied (44) angeordnetes Dichtelement (44.2) verschließbar ist.

10. Teezubereitungsvorrichtung (100') nach einem der vorstehenden Ansprüche, **dadurch gekennzeichnet, dass** in der Verschlusseinheit (20') ein Sicherheitsverriegelungselement (27') angeordnet ist, welches zwischen einer verriegelten Stellung, in welcher das erste Hebelelement (41') gegen Bewegung blockiert ist, und einer entriegelten Stellung, in welcher das erste Hebelelement (41') frei beweglich ist, bewegbar ist.

11. Teezubereitungsvorrichtung (100') nach einem der vorstehenden Ansprüche, **dadurch gekennzeichnet, dass** das Sicherheitsverriegelungselement (27') mindestens einen Anschlag (27.2') bereitstellt und dass das erste Hebelelement (41') auf einer Seitenfläche einen Steg (41.1') aufweist, welcher in der verriegelten Stellung des Sicherheitsverriegelungselementes (27') den Anschlag (27.2) berührt.

12. Vakuumbecher, mindestens umfassend einen doppelwandigen Isolierbehälter (200) und eine Teezubereitungsvorrichtung (100; 100') nach einem der vorstehenden Ansprüche.

## Revendications

1. Dispositif de préparation de thé (100 ; 100') pour une carafe thermos ou une tasse sous vide, comprenant au moins :
- un élément de base (10), qui peut être inséré dans un goulot de la carafe ou de la tasse et qui est doté d'au moins une ouverture de sortie (15) pouvant être fermée via une unité de fermeture (20 ; 20') et qui continue en dessous de l'ouverture de sortie (15) dans un tube central (13) ;
- un élément de réception de passoire à thé (33) qui est agencé dans le tube central (13) pouvant y être déplacé axialement au moyen d'une unité d'abaissement (40) et qui est rendu étanche par rapport au tube central (13) ;
- une passoire à thé (30) pouvant être reliée à l'élément de réception de passoire à thé (33), qui peut coulisser entre une position d'infusion, dans laquelle elle fait saillie au moins sur une partie de sa hauteur à partir du tube central (13), et une position fermée, dans laquelle le tube central (13) est fermé par un fond imperméable de la passoire (30),
**caractérisé en ce que** l'unité d'abaissement (40) comprend un élément d'actionnement (21) monté de manière pivotante dans l'unité de fermeture (20 ; 20') et un engrenage à manivelle au moins en deux parties (41, 42, 43, 44 ; 41') qui relie l'élément d'actionnement (21) et l'élément de réception de passoire à thé (33) l'un à l'autre.

2. Dispositif de préparation de thé (100 ; 100') selon la revendication 1, **caractérisé en ce que** :
- l'élément de base (10) est doté d'une bague d'étanchéité de base (16) pour assurer une étanchéité contre le goulot de la carafe ou de la tasse isolante, et **en ce que**
- l'ouverture de sortie (15) est agencée radialement entre la bague d'étanchéité de base (16) et le tube central (13).

3. Dispositif de préparation de thé (100 ; 100') selon la revendication 2, **caractérisé en ce que** l'unité de fermeture (20 ; 20') présente au moins une section centrale tubulaire (23) et un bord recouvrant radialement (22), dans lequel la section centrale (23) peut être insérée dans le tube central (13) de l'élément de base (10) et dans lequel le bord (22) recouvre l'ouverture de sortie (15) dans une position fermée.

4. Dispositif de préparation de thé (100 ; 100') selon la revendication 3, **caractérisé en ce que** :
- une zone annulaire située entre la bague d'étanchéité de base (16) et le tube central (13) comprend plusieurs ouvertures de sortie arquées (15), et **en ce que**
- une bague d'étanchéité (25) ou une surface d'étanchéité respective par ouverture de sortie (15) est (sont) agencée(s) sur la face inférieure du bord (22).

5. Dispositif de préparation de thé (100; 100') selon l'une quelconque des revendications 1 à 4, **caractérisé en ce que** l'unité de fermeture (20 ; 20') peut être couplée à l'élément de base (10) via un couplage à baïonnette (24, 14.1, 14.2) qui est formé entre la partie centrale (22) de l'unité de fermeture (20 ; 20') et le tube central (13) de l'élément de base (10).

6. Dispositif de préparation de thé (100 ; 100') selon la revendication 5, **caractérisé en ce que** la fermeture à baïonnette comprend au moins deux broches (24) agencées sur la circonférence de la partie centrale (23) et au moins deux rainures de guidage formées sur l'intérieur (13.1) du tube central (13), dans lequel les rainures de guidage présentent chacune une partie d'insertion (14.1) orientée parallèlement ou selon un angle aigu par rapport à l'axe central et alignée selon angle obtus par rapport à la partie de verrouillage d'axe central (14.2).

7. Dispositif de préparation de thé (100; 100') selon l'une quelconque des revendications 1 à 6, **caractérisé en ce que**
- un premier élément de levier (41 ; 41') est monté de manière pivotante sur un palier fixe (42) dans l'unité de fermeture (20 ; 20'), dans lequel une extrémité de l'élément de levier (41 ; 41') est conçue sous la forme d'un élément d'actionnement (21) et dans lequel l'autre extrémité est reliée à un second élément de levier (44) via une première articulation (43), et
- **en ce que** le second élément de levier (44) est relié à l'élément de réception de passoire à thé (33) via la seconde articulation (45).

8. Dispositif de préparation de thé (100 ; 100') selon la revendication 7, **caractérisé en ce que** la première extrémité de l'élément de levier (41 ; 41') est réalisée sous la forme d'un élément d'actionnement (21) en forme de bouton qui est accessible au niveau d'un évidement (26) sur l'extérieur de l'unité de fermeture (20 ; 20').

9. Dispositif de préparation de thé (100; 100') selon la revendication 7 ou 8, **caractérisé en ce que** l'élément de réception de passoire à thé (33) présente une plaque de fermeture supérieure sous la seconde articulation (45) présentant au moins une ouverture de ventilation (36) qui peut être fermée par un élément d'étanchéité (44.2) agencé latéralement au niveau du second élément de levier (44).

10. Dispositif de préparation de thé (100') selon l'une quelconque des revendications précédentes, **caractérisé en ce qu'**un élément de verrouillage de sécurité (27') est agencé dans l'unité de fermeture (20') qui est mobile entre une position verrouillée dans laquelle le premier élément de levier (41') est bloqué vis-à-vis d'un déplacement et une position déverrouillée dans laquelle le premier élément de levier (41') est libre de se déplacer.

11. Dispositif de préparation de thé (100') selon l'une quelconque des revendications précédentes, **caractérisé en ce que** l'élément de verrouillage de sécurité (27') fournit au moins une butée (27.2') et **en ce que** le premier élément de levier (41') présente une âme (41.1') sur une face latérale qui vient en contact avec la butée (27.2) dans la position verrouillée de l'élément de verrouillage de sécurité (27').

12. Tasse sous vide, comprenant au moins un récipient isolant à double paroi (200) et un dispositif de préparation de thé (100 ; 100') selon l'une quelconque des revendications précédentes.
